(19) Europäisches Patentamt / European Patent Office / Office européen des brevets

(11) **EP 3 225 905 A1**

(12) **DEMANDE DE BREVET EUROPEEN**

(43) Date de publication:
**04.10.2017 Bulletin 2017/40**

(51) Int Cl.:
*F21S 8/10* (2006.01)

(21) Numéro de dépôt: **17162431.5**

(22) Date de dépôt: **22.03.2017**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**
Etats de validation désignés:
**MA MD**

(30) Priorité: **30.03.2016 FR 1652742**

(71) Demandeur: **Valeo Vision**
**93012 Bobigny Cedex (FR)**

(72) Inventeurs:
• **ALBOU, Pierre**
  **75013 Paris (FR)**
• **MOREL, Xavier**
  **75015 Paris (FR)**

(54) **DISPOSITIF ARRIÈRE D'ÉCLAIRAGE ET/OU DE SIGNALISATION POUR VÉHICULE AUTOMOBILE, ET FEU ARRIÈRE D'ÉCLAIRAGE ET/OU DE SIGNALISATION MUNI D'UN TEL DISPOSITIF**

(57) La présente invention concerne un dispositif arrière d'éclairage et/ou de signalisation, notamment pour véhicule automobile, comprenant une source de lumière (12), une surface de transmission (11) et des moyens de distribution d'au moins une partie de la lumière issue de la source (12) sur la surface de transmission (11), les moyens de distribution comprenant une matrice (14) de micro-miroirs pilotables chacun suivant au moins deux positions d'inclinaisons différentes. Une autre source (32) est présente et un mode de fonctionnement permet l'illumination d'une partie des micro-miroirs par la source (12) et une autre partie par la source (32).

**FIG. 3**

EP 3 225 905 A1

**EP 3 225 905 A1**

**Description**

La présente invention est relative notamment à un dispositif arrière d'éclairage et/ou de signalisation pour véhicule automobile, et à un feu arrière d'éclairage et/ou de signalisation muni d'un tel dispositif.

Une application préférée concerne l'industrie automobile, pour l'équipement de véhicules, en particulier pour la réalisation de dispositifs susceptibles de pouvoir émettre des faisceaux lumineux, encore appelés fonctions d'éclairage et/ou de signalisation, répondant en général à des réglementations à l'arrière du véhicule. Par exemple, l'invention peut permettre la production d'un faisceau lumineux hautement résolu de type pixélisé notamment pour une signalisation à l'arrière d'un véhicule. Elle peut servir non exclusivement à l'affichage de pictogrammes au niveau d'une surface de projection embarquée dans le véhicule.

Les feux de signalisation de véhicule automobile situés à l'arrière du véhicule, sont des dispositifs lumineux qui comprennent une ou plusieurs sources de lumière et une glace qui ferme le feu. De façon simplifiée, la source lumineuse émet des rayons lumineux pour former un faisceau lumineux qui est dirigé vers la glace afin de produire une plage éclairante qui transmet la lumière à l'extérieur du véhicule. La couleur de la plage éclairante est caractéristique de la fonction ou du type de feu. Ainsi, on sait qu'une plage éclairante de couleur blanche indique que le feu est un feu de marche arrière, qu'une plage éclairante de couleur ambre est un indicateur de direction, et qu'une plage éclairante de couleur rouge est un feu de position arrière ou un feu stop, le feu stop étant d'une luminosité plus intense. Il existe aussi les feux rouges antibrouillard, dont l'intensité est encore plus forte pour être visibles dans des conditions climatiques difficiles, telles que du brouillard, des fortes pluies ou des chutes de neige. En plus de la couleur, ces feux doivent répondre à des réglementations en matière d'intensité lumineuse et d'angles de visibilité notamment.

Cependant, bien que chaque feu arrière ait une signification particulière règlementée, cela peut s'avérer insuffisamment détaillé ou précis pour un observateur. Il est nécessaire de décoder la couleur et le type de feu qui est actionné pour essayer de comprendre l'intention du conducteur d'un véhicule ou par exemple la situation d'urgence qu'il rencontre. Ainsi, lorsque les véhicules sont en circulation, il n'est pas évident ou possible de comprendre précisément la situation rencontrée par un véhicule lorsqu'un de ses feux s'allume. En effet, même si le conducteur d'un véhicule suiveur observe l'allumage d'un feu stop sur un véhicule le devançant, le simple allumage du feu ne lui donne pas d'indication sur la cause exacte du freinage.

En outre, le nombre de feux arrière différents étant limité à ceux évoqués précédemment, certaines situations sont difficilement descriptibles avec un nombre aussi restreint de messages. Dans beaucoup de situations, un véhicule ne peut pas avertir de façon plus précise les autres véhicules des évènements qui se produisent.

On connait des systèmes d'éclairage arrière pour véhicule, comportant une matrice de micro-miroirs disposée entre une source lumineuse et un écran. Un ensemble de lentilles d'entrée est intercalé entre la source et la matrice et un ensemble de lentilles de sortie est intercalé entre la matrice et l'écran. Cet ensemble permet la projection de lumière dont la distribution est modifiable en pilotant chaque micro-miroir. On peut ainsi accroître les informations fournies en sortie du feu équipé, en produisant par exemple différentes formes lumineuses d'affichage sur l'écran. Cependant, l'ensemble ainsi proposé est complexe au regard de son usage, essentiellement limité à la mise en forme d'un motif d'un faisceau unique à projeter sur l'écran.

Il existe un besoin pour des dispositifs arrière d'éclairage et/ou de signalisation qui soient d'usage moins limité que ceux existant.

La présente invention vise à répondre au moins en partie à cet objectif.

A cet effet, la présente invention concerne notamment un dispositif arrière d'éclairage et/ou de signalisation, notamment pour véhicule automobile, comprenant une source de lumière, une surface de transmission et des moyens de distribution d'au moins une partie de la lumière issue de la source sur la surface de transmission, les moyens de distribution comprenant une matrice de micro-miroirs pilotables chacun suivant au moins deux positions d'inclinaisons différentes comprenant une première position dans laquelle des rayons issues de la source sont renvoyés par un micro-miroir vers la surface de transmission et une deuxième position dans laquelle les rayons issues de la source ne sont pas renvoyés par un micro-miroir vers la surface de transmission. Avantageusement, il comporte au moins une source additionnelle de lumière configurée de sorte que des rayons issus de la source additionnelle sont renvoyés par un micro-miroir vers la surface de transmission quand ledit micro-miroir est dans la deuxième position et ne sont pas renvoyés par un micro-miroir vers la surface de transmission quand ledit micro-miroir est dans la première position.

De préférence et non limitativement, les moyens de distribution comprennent au moins un mode de fonctionnement mixte dans lequel la source et la source additionnelle sont émissives simultanément et dans lequel au moins une partie des micro-miroirs sont dans la première position et au moins une autre partie des micro-miroirs sont dans la deuxième position.

On dispose ainsi d'un dispositif bien plus complet que les techniques actuelles dans la mesure où la matrice de micro-miroirs est employée pour une pluralité des faisceaux chacun émis d'une source différente, et non dédiée uniquement à une seule source. En outre, la matrice est exploitée dans les deux positions des miroirs alors qu'une des positions était inactive dans l'état de la technique.

2

Avec un mode de fonctionnement mixte avantageux, la lumière sortant de la matrice provient simultanément de deux sources au moins, ce qui permet des fonctionnalités plus nombreuses. Par exemple, le feu arrière rouge peut être actif en même temps d'un feu clignotant de changement de direction, le tout employant la matrice de micro-miroirs comme élément de distribution de faisceaux à transmettre via la surface de transmission.

Suivant un aspect préféré de l'invention, la source et la source additionnelle ont des intervalles de longueurs d'ondes d'émission de lumière différentes. On peut ainsi produire des fonctions variées en sortie. Eventuellement, la source est configurée pour émettre de la lumière dans les longueurs d'ondes dans la couleur rouge. Par ailleurs, la source additionnelle peut être configurée pour émettre de la lumière dans les longueurs d'ondes dans la couleur orange.

Suivant une variante de l'invention, la source et/ou la source additionnelle est contrôlée pour émettre dans des longueurs d'onde de différentes couleurs.

Selon une première alternative, la source de lumière est une diode électroluminescente de type RGB, pour l'acronyme anglais Red, Green, Blue et comporte trois surfaces émettrices qui émettent une lumière dans des longueurs d'ondes respectivement de couleur rouge, vert et bleu. On réalise la couleur émise par la source de lumière en mélangeant les couleurs émises par les trois surfaces émettrices.

Selon une autre alternative, la source de lumière est une diode électroluminescente avec au moins deux surfaces émettrices émettant dans des longueurs d'onde dans des couleurs différentes de préférence choisies parmi rouge, orange et blanc. On réalise la couleur émise par la source de lumière en activant sélectivement la surface émettrice correspondant à la couleur souhaitée.

La puissance rayonnée d'au moins l'une parmi la source et la source additionnelle est avantageusement inférieure à 1W. Cela est conforme aux puissances habituellement suffisantes pour les fonctions arrière d'éclairage et/ou de signalisation. L'échauffement engendré par de telles puissances est en outre limité, ce qui simplifie grandement la conception des dispositifs.

Dans un mode de réalisation, la source et la source additionnelle partagent une même source primaire, le dispositif comprenant un répartiteur de rayons lumineux issus de la source primaire entre la source et la source additionnelle. Dans ce cas, la source et la source additionnelle sont des sources secondaires. Cela simplifie la conception de génération de lumière, car une seule source primaire peut être employée. En cas de panne, une seule source est à remplacer et la source primaire est moins encombrante que la multiplication de sources primaires complètes impliquant la multiplication des supports mécanique, des alimentations électriques par exemple. Il peut s'agir d'une source primaire de couleur blanche, des moyens de conversion pouvant par ailleurs servir à obtenir des couleurs différentes du blanc en sortie. Eventuellement, une fibre optique conduit la lumière depuis la source primaire jusqu'au répartiteur. En complément ou alternativement, au moins l'une parmi la source et la source additionnelle peut comprendre une fibre optique de conduction de lumière en sortie du répartiteur (34) et dont une extrémité distale est dirigée vers la matrice. On dispose ainsi d'un chemin de passage de la lumière en direction de la matrice. Cette disposition est peu encombrante.

Avantageusement, au moins une parmi la source et la source additionnelle comprend un dispositif de conversion configuré pour recevoir de la lumière issue de la source primaire et pour réémettre de la lumière convertie dans un intervalle de longueurs d'ondes différent de celui de la lumière issue de la source primaire. On obtient ainsi le changement de couleur évoqué plus haut.

Le dispositif de conversion peut comprendre des éléments luminophores.

Suivant une autre réalisation possible de l'invention, un diffuseur de lumière est configuré pour recevoir des rayons lumineux issus de la source primaire et pour les renvoyer au moins en partie vers la surface de transmission, sans réflexion sur la matrice. Il peut s'agir d'un diffuseur de lumière captant une partie des rayons des fibres optiques placées sur le chemin des rayons issus de la source primaire et en direction de la matrice de micro-miroirs. On peut de la sorte notamment créer un éclairage de style et/ou participer photométriquement à une fonction réglementaire, possiblement permanent, sur le feu arrière.

Les moyens de distribution comprennent optionnellement au moins un autre mode de fonctionnement dans lequel la source est émissive et la source additionnelle est non émissive et dans lequel au moins une partie des micro-miroirs sont dans la première position et au moins une autre partie des micro-miroirs sont dans la deuxième position. Un seul faisceau est alors projeté sur la surface de transmission, pour la réalisation d'une seule fonction à partir de la source.

Suivant une possibilité alternative ou additionnelle, les moyens de distribution comprennent au moins un autre mode de fonctionnement dans lequel la source est non émissive et la source additionnelle est émissive et dans lequel au moins une partie des micro-miroirs sont dans la première position et au moins une autre partie des micro-miroirs sont dans la deuxième position. Un seul faisceau est alors projeté sur la surface de transmission, pour la réalisation d'une seule fonction à partir de la source additionnelle.

Une autre possibilité est que les moyens de distribution comprennent au moins un autre mode de fonctionnement mixte dans lequel la source et la source additionnelle sont émissives simultanément et dans lequel au moins une partie des micro-miroirs sont dans la première position et au moins une autre partie des micro-miroirs sont dans la deuxième position, le nombre de micro-miroirs dans la première position et/ou dans la deuxième position y étant différent du nombre de micro-miroirs dans la première position et/ou dans la deuxième position du mode de fonctionnement mixte. On peut ainsi faire varier la forme et/ou l'intensité des faisceaux produits impactant la surface de transmission.

Au moins une parmi la source et la source additionnelle est avantageusement configurée pour émettre un faisceau lumineux passant en sortie de source par une surface dont la plus grande dimension est inférieure à 100 um. Le terme rayon éventuellement employé ici ne sous-tend pas que le faisceau est de section circulaire à cet endroit et ce terme est employé pour signifier une évaluation de la taille du faisceau. D'une manière générale, il est avantageux que la source soit quasi ponctuelle de sorte à impacter directement la matrice de micro-miroirs, notamment sans optique intermédiaire. Dans ce cadre, le faisceau lumineux est possiblement divergent et/ou illumine directement la matrice de micro-miroirs.

Au moins l'une parmi la source et la source additionnelle peut comprendre au moins un parmi : une diode électroluminescente, un émetteur laser, une source lumineuse à semi conducteur comprenant une pluralité d'unités électroluminescentes de dimensions submillimétriques, les unités étant réparties dans différentes zones lumineuses activables sélectivement. En particulier, chacune des unités lumineuses électroluminescentes de dimensions submillimétriques prend la forme d'un bâtonnet. En outre, les bâtonnets sont sur un même substrat, qui de préférence comprend du silicium.

Un autre aspect de l'invention est relatif à un feu arrière d'éclairage et/ou de signalisation de véhicule automobile équipé d'au moins un dispositif d'éclairage et/ou de signalisation selon l'invention. De préférence, un autre aspect de l'invention est relatif à un feu de signalisation arrière de véhicule automobile équipé d'au moins un dispositif de signalisation arrière.

Ce feu peut comprendre une glace de sortie de lumière et de fermeture du feu, ladite glace comprenant la surface de transmission.

Suivant des possibilités additionnelles de réalisation de l'une au moins des sources de lumière de l'invention, possibilités qui peuvent être employées seules ou selon toutes combinaisons, le dispositif est tel que :

- la source et/ou la source additionnelle est configurée pour émettre un faisceau lumineux dont le rayon en sortie de la source, est inférieur à une valeur Rs solution de l'équation suivante :

$$T_P = 2D\left\{ tg\left( atan\frac{x}{y} - 2\alpha - \frac{\pi}{2} \right) - tg\left( atan\frac{x}{y} - 2\alpha - atan\frac{R_S}{\sqrt{x^2 + y^2}} - \frac{\pi}{2} \right) \right\}$$

Où

- x (qui est la distance entre le milieu de la surface de sortie de la source considérée et le plan contenant les axes de rotation des micro miroirs) est solution de l'équation suivante :

$$\frac{l-L}{D} = \frac{1}{tg\left(\pi - atan\left(\frac{x}{y-\frac{L}{2}}\right) - 2\alpha\right)} - \frac{1}{tg\left(\pi - atan\left(\frac{x}{y+\frac{L}{2}}\right) - 2\alpha\right)}$$

Avec :

- l est la largeur de l'image produite sur la surface de transmission ;
- L est la dimension en longueur ou en largeur (de préférence la plus grande des deux) de la matrice de micro-miroirs ;
- D est la distance séparant la surface de transmission et la matrice de micro-miroirs ;
- α est l'angle maximal de basculement d'un micro-miroir par rapport au plan contenant les axes de rotation des micro-miroirs.

Et : - y correspond à la distance entre le milieu du micro-miroir central et la projection orthogonale du milieu de la sortie de la source sur un plan parallèle à la surface de transmission.

- Le micro-miroir central est le micro-miroir de la matrice de micro-miroirs qui est situé le plus proche du centre géométrique de la matrice de micro-miroirs ;
- Selon un mode de réalisation particulièrement avantageux, le rayon $R_s$ est inférieur à 100 $\mu$m. Suivant cet aspect, éventuellement dissociable des autres aspects de l'invention, le diamètre est choisi très faible de sorte à ce que la source soit assimilable à une source quasi-ponctuelle.

- De manière également avantageuse, le faisceau lumineux est divergent.

Particulièrement, une forme conique de faisceau permet de ne pas perdre trop de lumière autour de la matrice de micro-miroirs, qui est habituellement de contour rectangulaire.

- Avantageusement, le faisceau lumineux illumine directement la matrice de micro-miroirs. Suivant cet aspect, éventuellement dissociable des autres aspects de l'invention, on évite alors le recours à une optique d'entrée.
- De manière préférentielle, le diamètre du faisceau impactant la matrice de micro-miroirs est égal à la plus grande dimension de la matrice de micro-miroirs. De cette façon, et de préférence sans élément intermédiaire, la source produit une illumination d'une efficacité optimale de la matrice avec une taille de faisceau, à l'endroit de la matrice, juste suffisante à l'illumination de tous les miroirs. Par exemple, le diamètre du faisceau peut être égal (ce qui couvre des écarts de dimensions par exemple de +/- 10%) ou légèrement supérieur à la diagonale de la matrice aussi dénommée DMD (pour Digital Micromirror Device) qui est de préférence rectangulaire. Plus précisément, l'intersection d'un faisceau conique avec le plan du DMD peut être elliptique. Idéalement cette ellipse passe par les quatre coins du DMD. En pratique, en raison de l'asymétrie du système, elle passe par deux coins du DMD et recouvre la totalité de sa surface.
- Optionnellement, les moyens de distribution consistent en la matrice de micro-miroirs. Suivant cet aspect, éventuellement dissociable des autres aspects de l'invention, aucun autre élément n'est en effet absolument indispensable entre la source et la surface de transmission.
- De manière avantageuse, la matrice de micro-miroirs est configurée pour produire un faisceau de sortie projeté directement sur la surface de transmission. Suivant cet aspect, éventuellement dissociable des autres aspects de l'invention, on évite de recourir à des éléments de transformation intermédiaire, tels une ou plusieurs lentilles, dont la présence poserait des problèmes de floutage d'image ou pour le moins un choix d'optique spécifique à ajouter.
- Préférentiellement, la source est située de manière décalée relativement à la direction moyenne du faisceau de sortie, de sorte à ne pas interférer avec ledit faisceau de sortie.
- De manière avantageuse, la source comprend au moins un parmi : une diode électroluminescente, un émetteur laser, une micro-source à bâtonnets électroluminescents.
- A titre préféré, la source comprend un dispositif de génération d'un faisceau lumineux d'entrée et un élément de transformation configuré pour réduire le rayon du faisceau lumineux d'entrée.
- De manière avantageuse, l'élément de transformation comprend au moins l'un parmi : un diaphragme, une lentille, un réflecteur, une fibre optique.
- Optionnellement, le plan de la matrice de micro-miroirs forme un angle avec une normale à la surface de transmission d'une valeur non nulle strictement inférieure à 45°, de préférence inférieure à 30°.
- Préférentiellement, ledit angle est nul.

Ainsi, suivant ces aspects de l'invention, la source considérée peut être suffisamment proche d'une source ponctuelle idéale pour illuminer correctement la matrice de micro-miroir dans des conditions qui évitent le recours systématique à des éléments optiques et en particulier à une lentille entre la matrice et la surface de transmission. Outre une simplification certaine, la suppression de cette lentille évite les phénomènes de flou aux bords de l'écran constatés jusqu'alors du fait de la différence de distance à la lentille des miroirs de la matrice qui est inclinée relativement à la normale à la surface de transmission. Même sans inclinaison, si les centres de l'image et du DMD ne sont pas alignés le long de la normale aux deux surfaces, cela implique une ouverture plus grande pour une optique aplanétique et donc une plus grande difficulté à être net sur toute la surface de l'image.

Structurellement, la source et/ou la source additionnelle peut être décalée sur le côté de la matrice relativement à la surface de transmission de sorte à ne pas faire obstacle à la sortie de rayons lumineux hors de la matrice tout en concentrant la lumière de la source sur la matrice pour perdre le moins de lumière possible. Grâce à l'invention, la source peut être écartée latéralement tout en ayant une illumination ciblée sur la matrice de micro-miroirs.

La présente invention concerne également un véhicule équipé d'au moins un feu arrière et/ou un dispositif selon la présente invention.

D'autres caractéristiques et avantages de la présente invention seront mieux compris à l'aide de la description exemplaire et des dessins parmi lesquels :

- la figure 1 montre une configuration existante de dispositif d'éclairage à matrice de micro-miroirs ;
- la figure 2 représente de façon schématique un véhicule muni de deux dispositifs de signalisation à affichage de pictogrammes selon un mode de réalisation de l'invention ;
- la figure 3 illustre de manière générale des composants de l'invention, dans un mode de réalisation ;
- la figure 4 montre un autre mode de réalisation de l'invention ;

- la figure 5 illustre un mode non limitatif de détermination d'un diamètre d'au moins une source ;
- les figures 6 à 9 montrent des possibilités de réalisation de source de petite dimension ;
- les figures 10 à 12 donnent des exemples d'un mode de réalisation de l'invention.

Sauf indication spécifique du contraire, des caractéristiques techniques décrites en détail pour un mode de réalisation donné peuvent être combinées à des caractéristiques techniques décrites dans le contexte d'autres modes de réalisation décrits à titre exemplaire et non limitatif.

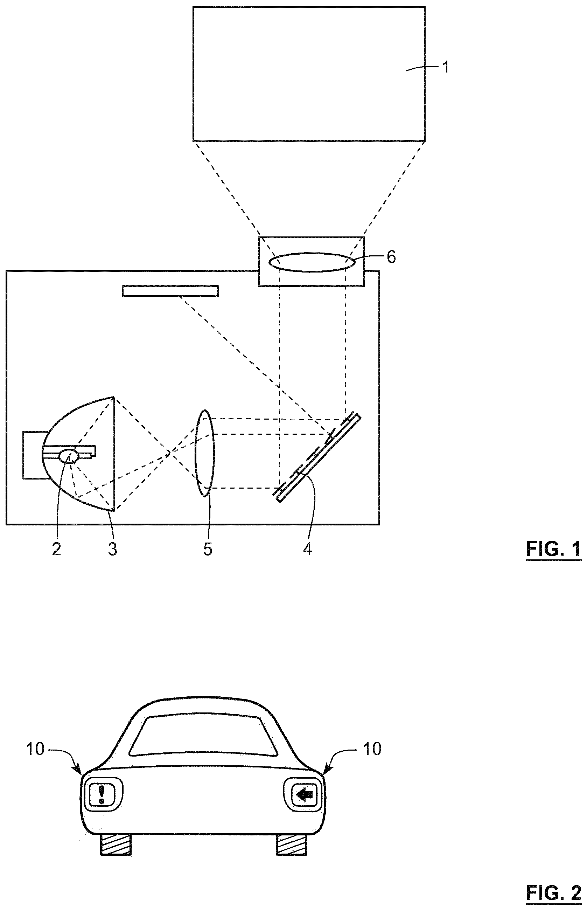

La figure 1 représente un exemple de structure de projection de faisceaux selon une technique antérieure, avec au moins une source de lumière 2 formée d'au moins une diode électroluminescente et un réflecteur 3 volumineux, une surface transmissive définissant la zone de projection 1, et une matrice de micro-miroirs 4 configurés pour réfléchir les rayons lumineux issus de la source de lumière vers la surface de transmission.

Le faisceau lumineux qui est issu de la source de lumière 2 est destiné à venir éclairer la surface de projection 1. Sont aussi prévus des moyens de collimation formés par une lentille optique 5, afin de collimater les rayons issus de la source lumineuse 2 sur la matrice de micro-miroirs 4 ainsi qu'un système optique 6 de focalisation des rayons réfléchis par la matrice de micro-miroirs 4 vers la surface de projection 1, afin que le faisceau émis formant le pictogramme soit bien focalisé sur la surface, pour que le pictogramme apparaisse bien défini et net.

La figure 2 représente une vue arrière d'un véhicule muni de deux dispositifs de signalisation 10 ici employés pour l'affichage de pictogrammes. Chaque dispositif de signalisation 10 comprend une surface de transmission 11 agencée à l'arrière du véhicule, sensiblement à l'endroit où est usuellement disposé un feu arrière de signalisation. La surface de transmission 11 a notamment pour fonction l'affichage de pictogrammes. Le pictogramme est formé sur la surface de transmission 11. Il apparait alors comme bien défini et bien net.

Les caractéristiques photométriques réglementaires des feux de signalisation arrière tels que les feux de position, d'indicateur de direction, de feu stop ou de brouillard sont bien définies. Elles concernent notamment les plages d'intensité lumineuse minimum et maximum à respecter, l'angle de visibilité du faisceau, la couleur du faisceau, la superficie de la surface lumineuse de la fonction, ou encore la distance minimale entre des fonctions différentes. Par exemple, un feu de brouillard doit être à 10 cm au moins du feu stop pour éviter de les confondre.

L'affichage est avantageusement configuré pour qu'au moins un faisceau lumineux émis remplisse à lui seul les caractéristiques photométriques réglementaires d'une fonction de signalisation définie. Dans un mode de réalisation à affichage de pictogramme, chaque pictogramme affiché est paramétré pour émettre un faisceau lumineux qui réponde à toutes les exigences réglementaires mentionnées précédemment. Un seul pictogramme peut notamment remplir plusieurs fonctions simultanément ou alternativement, comme par exemple un clignotant et un feu de position. Plusieurs pictogrammes peuvent aussi être affichés simultanément ou alternativement, chaque pictogramme remplissant les caractéristiques photométriques d'une fonction différente du feu de signalisation.

De préférence et avantageusement, la fonction de signalisation arrière réalisée avec le ou les pictogrammes est une fonction au moins, parmi les suivantes : feu de position (ou lanterne) ou une fonction combinée lanterne et feu stop.

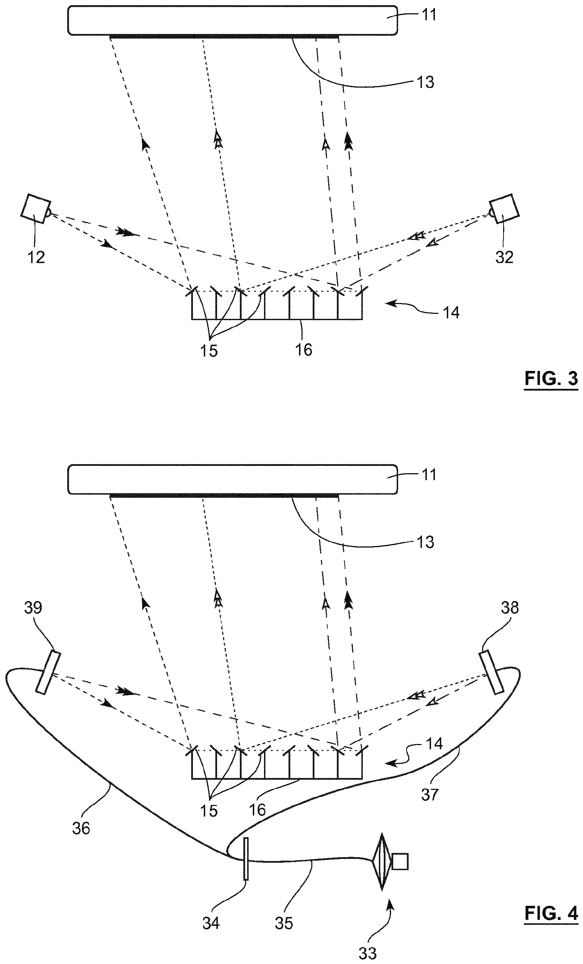

La figure 3 montre un exemple de réalisation de l'invention. Une source 12 est schématisée en partie gauche de la figure et constitue la partie de génération de la lumière qui sera transformée dans le reste du dispositif. Ce dernier comporte aussi des moyens de distribution de lumière permettant de produire plusieurs configurations de sortie de lumière. Ces moyens comprennent ou sont formés par une matrice 14 de micro-miroirs. Les miroirs 15 permettent, suivant leur état d'activation, la réflexion de lumière en direction de la surface de transmission 11. Cette dernière surface de transmission 11 est l'élément aval du dispositif. C'est une zone par laquelle la lumière réfléchie par la matrice 14 est amenée vers l'extérieur.

Selon l'invention, une autre source, dite source additionnelle 32 est prévue pour illuminer la matrice 14. Dans l'illustration de la figure 3, une source 32, séparée de la source 12, est disposée d'un côté de la matrice 14 opposé à celui où est présente la source 12. Notamment, on peut définir un plan médian de la matrice, passant par le milieu d'une de ses dimensions longue ou large et perpendiculaire au support de la matrice (le plan coupant la matrice dans le sens de son épaisseur), les sources 12 et 32 étant situées de part et d'autre de ce plan médian. Le placement des sources 12, 32 peut éventuellement être symétrique autour de ce plan.

Les sources 12, 32 peuvent être de couleurs différentes, par exemple l'une rouge, l'autre orange. Ou encore une source peut être blanche et l'autre rouge ou orange. On peut aussi prévoir plus de deux sources, par exemple une source blanche, une source rouge et une source orange. On peut prévoir que deux de ces trois sources soient placées de sorte à illuminer la matrice 14 pour que la lumière soit renvoyée vers la surface de transmission lorsque les miroirs sont dans une même position, et que lesdites deux sources soient émissives de manière alternative. La source additionnelle est donc par exemple dédoublée et deux sources sont présentes de ce côté de la matrice 14. On peut aussi prévoir deux sources seulement mais avec une variation de couleur de l'une d'entre-elles au moins de sorte par exemple à passer de l'orange au rouge et inversement selon les fonctions à remplir Cette variation peut être opérée par un commutateur dirigeant sur commande les rayons (par exemple de couleur blanche initialement) vers l'un ou l'autre parmi deux dispositifs de conversion de couleur différant par la couleur réémise. On donne plus loin des exemples de dispositifs de conversion.

Dans le cas de la figure 3, les sources 12, 32 sont des sources totalement distinctes en ce sens que la lumière qu'elles projettent sur la matrice n'est pas issue d'une même source d'origine.

D'une manière générale, la présente invention peut utiliser des sources lumineuses qui peuvent comprendre ou être intégralement constituées d'émetteurs de lumières du type diodes électroluminescentes encore communément appelées LEDs. Notamment, ces LEDs peuvent être dotées d'au moins une puce apte à émettre une lumière d'intensité avantageusement ajustable selon la fonction d'éclairage et/ou de signalisation à réaliser. Par ailleurs, le terme source lumineuse ou émetteur lumineux s'entend ici comme couvrant un ensemble d'au moins une source élémentaire telle une LED apte à produire un flux conduisant à générer en sortie du dispositif de l'invention au moins un faisceau lumineux. La source de lumière est par exemple formée d'au moins une diode électroluminescente. Avantageusement, il s'agit d'un ensemble de sources de lumière, ensemble du type diode électroluminescente multi-puces, c'est-à-dire d'un composant électronique unique comportant plusieurs émetteurs électroluminescents.

Selon une caractéristique, la lumière émise par ces diodes électroluminescentes est rouge, ambre ou blanche. D'autres types de sources sont aussi envisageables dans l'invention, telle une ou plusieurs sources laser, par exemple des diodes laser. Dans ce dernier cas, il est avantageux que ce type d'émetteur soit associé à un élément conférant moins de cohérence à la lumière sortant de cet ensemble formant la source, tel une couche réémissive, par exemple luminophore telle que phosphorescente.

Suivant une possibilité, la source 12, par exemple rouge, est de type laser, de préférence couplé à un dispositif réémissif selon le paragraphe précédent, et la source 32, par exemple orange, est de type LED.

On entend par lumière de couleur rouge de préférence de la lumière dont les longueurs d'ondes sont dans une gamme de longueur d'ondes du le spectre visible par l'oeil humain et au-delà de 600 nm, de préférence entre 620 nm et 750 nm.

On entend par lumière de couleur orange de préférence de la lumière dont les longueurs d'ondes sont dans une gamme de longueur d'ondes du le spectre visible par l'oeil humain entre 584 nm et 605 nm. On peut en outre ou alternativement se référer aux normes AFNOR X08-010 pour la définition des couleurs.

Une ou plusieurs des sources ici envisagées peut aussi être monochromatique. Ainsi, les termes tels que intervalle de longueurs d'ondes s'entendent comme couvrant des intervalles consistant en une valeur unique de longueur d'ondes.

Selon un aspect avantageux de l'invention, la source 12 est configurée pour émettre un faisceau, en direction des moyens de distribution, typiquement une matrice 14 de micro-miroirs, de sorte à couvrir l'ensemble des miroirs, sans pour autant engendrer, en sortie de source 12, une taille de faisceau importante. De préférence, ce faisceau est d'enveloppe tronconique et divergent. L'invention permet d'éviter le recours à des éléments optiques, fonctionnant en collimateur de faisceau (tels une lentille adaptée), et le faisceau peut directement impacter la matrice 14 de micro-miroirs, ce qui n'exclue pas le recours à des éléments particuliers (optiques notamment) pour former la source elle-même.

Des exemples de dimensionnements de la source 12 et de réalisations physiques de sources de taille réduite, de préférences assimilables à des sources, primaires ou secondaires, ponctuelles, sont donnés plus loin dans la description. Ces exemples ultérieurs et les remarques ci-dessus sont aussi valables pour la au moins une source additionnelle 32.

Dans le mode de réalisation de la figure 3, les moyens de distribution de lumière comprennent une matrice de micro-miroirs 14 (également connue sous l'acronyme DMD, pour l'anglais « Digital Micromirror Device ») qui dirige les rayons lumineux par réflexion. Les rayons lumineux issus d'une des sources 12, 32 sont réfléchis dans deux directions possibles : soit vers la surface de transmission 11, soit dans une direction différente.

A cette fin, chaque micro miroir peut pivoter entre deux positions fixes autour d'un axe, une première position dans laquelle les rayons lumineux issues d'une source 12, 32 donnée sont réfléchis vers la surface de transmission, et une deuxième position dans laquelle les rayons lumineux sont réfléchis dans une direction différente du système optique de focalisation. Les deux positions fixes sont orientées de préférence de la même manière pour tous les micro-miroirs et forment par rapport à un plan de référence support de la matrice de micro-miroirs un angle caractéristique de la matrice 14 de micro-miroirs, défini dans ses spécifications. Cet angle est généralement inférieur à 20° et vaut par exemple environ 12°.

Dans le cas représenté, le plan de référence de la matrice 14 de micro-miroirs est parallèle à un plan d'une zone de la surface de transmission 11 où le faisceau est projeté. La figure 3 illustre cette option. En position médiane, un micro-miroir est parallèle au plan de référence 16, et ainsi perpendiculaire à un axe normal à la surface de transmission 11. Suivant une variante, le plan de référence 16 de la matrice 14 n'est pas parallèle à la surface de transmission 11 mais faiblement incliné, par exemple de moins de 20°.

De manière préférée, la source 12 est située de manière décalée latéralement relativement à un espace séparant la matrice 14 de micro-miroirs et la surface de transmission 11, et est à une distance plus faible que la matrice 14 suivant une direction normale à la surface de transmission 11. Notamment, suivant cet aspect préféré, l'invention réduit, voire annule, cette inclinaison ce qui est favorable à la netteté de l'image en sortie, sur toute sa surface, y compris à ses bords.

D'une manière générale, chaque micro-miroir réfléchissant une petite partie des rayons lumineux issus de la source 12 et incidents sur la matrice 14, l'actionnement du changement de position permet de modifier la forme du faisceau émis par le système optique de focalisation et in fine sur la surface de transmission 11. Dans le cas d'affichage de pictogrammes, les rayons lumineux renvoyés par les micro-miroirs participent au pictogramme affiché par les moyens d'affichage. Et les rayons lumineux issus de la source 12 et renvoyés par les micro-miroirs dans une direction différente ne participent pas au pictogramme.

Un tel système est par exemple une matrice de micro-miroirs 14 de contour rectangulaire avec des micro-miroirs de 10$\mu$m de côté. On notera que cette dimension est très faible et peut être négligée, ce qui est le sens du calcul donné ci-dessous. D'une manière générale, la valeur Rp ci-dessous est une fonction croissante de la taille des miroirs. Chaque micro-miroir dispose de manière préférentielle de deux positions de fonctionnement. Une position dite première position correspond à une orientation des micro-miroirs permettant la réflexion vers un dioptre de sortie (tel la surface de transmission 11) d'un faisceau lumineux incident issu de la source 12. Une position dite deuxième position correspond à une orientation des micro-miroirs permettant la réflexion vers une surface absorbante d'un faisceau lumineux incident issu de la source 12, c'est à dire vers une direction différente de sortie. En pratique, chaque miroir peut être en mouvement permanent, en oscillant entre les deux positions, et c'est le ratio de temps très majoritairement passé dans l'une des positions qui est assimilé à une position fixe dans cette situation.

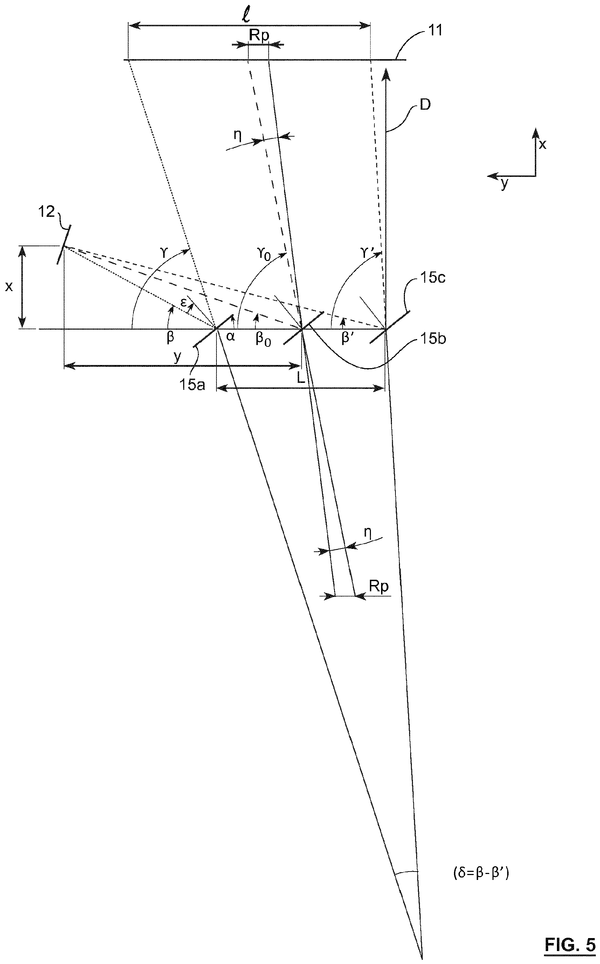

La figure 5 se réfère à un miroir central 15b qui s'entend comme d'un miroir de la matrice dont le centre est situé au centre de la matrice 14 ou qui en est le plus proche.

Selon l'invention, au moins une autre source 32 est disposée de sorte à ce que ces rayons lumineux impactent la matrice 14. En outre, la disposition de la source 32 est telle que, dans la première position des miroirs, les rayons issus de la source 32 ne soient pas dirigés vers la surface de transmission 11. À l'inverse, les rayons issus de la source 32 sont dirigés vers la surface de transmission 11 lorsque les miroirs sont dans la 2ème position. En conséquence, un miroir en position active pour la source 12 est en position inactive pour la source 32 et inversement. On a représenté en figure 3 un exemple de cette situation avec la formation d'une projection combinée issue des deux sources 12, 32 au niveau d'une portion 13 de la surface de transmission 11.

Dans le cas d'un faisceau de section circulaire divergent et d'une matrice rectangulaire (ou carrée), on s'arrange de préférence pour que le diamètre du faisceau impactant la matrice soit identique à la plus grande diagonale de la matrice et pour que le faisceau soit centré sur le point d'intersection des diagonales de la matrice.

Le pilotage de la matrice 14 de micro-miroirs est avantageusement effectué par une électronique de pilotage. Ce pilotage comprend à la fois le pilotage des orientations des micro-miroirs, mais également le taux de recouvrement des sous-faisceaux lumineux. Le pilotage des micro-miroirs permet donc de modifier la pixellisation des sous-faisceaux lumineux.

La surface de transmission 11 reçoit la lumière issue des micro-miroirs, de préférence directement. Cette surface assure la projection de faisceaux selon les paramètres de formes définis par la configuration commandée à la matrice 14 de micro-miroirs et/ou la production de pictogrammes affichés alors au niveau de la surface de transmission 11. Cette surface est transmissive et est par exemple agencée sur la glace de fermeture du feu ou bien est formée par un écran translucide placé derrière cette glace de fermeture. En particulier, la surface de transmission 11 est réalisée en un matériau diffuseur de lumière qui peut être un diffuseur diffractif (DOE - acronyme de l'anglais diffractive optical element) qui présente l'avantage de permettre la réalisation d'une indicatrice de diffusion en transmission bidirectionnelle ou BTDF (acronyme de l'anglais bidirectional transmittance distribution function) sur mesure, en particulier avec très peu de diffusion vers la source de lumière et une majorité de la lumière diffusée vers l'extérieur du dispositif. Avantageusement, la surface de transmission 11 est translucide et neutre en couleur ; la couleur du pictogramme affichée sera alors fonction de la couleur de la source lumineuse 12. Cette surface 11 peut être pour des raisons esthétiques de la même couleur que la source, voire d'une autre couleur désaturée ou comportant une composante de la couleur de la source. Par simplicité, on a représenté une surface plane mais ce cas n'est pas limitatif.

Ce type de dispositif permet de disposer en sortie, pour chaque source 12, 32, d'un faisceau lumineux hautement résolu pixélisé et digitalisé de sorte que chaque pixel ou rayons pixélisé composant ce faisceau correspond à un micro-miroir, il est alors possible d'activer ou non ces micro-pixels en simplement pilotant les micro-miroirs. Cette particularité permet alors de dessiner au besoin la forme du faisceau lumineux en sortie selon les besoins de l'invention.

La figure 5 présente un exemple de détermination de la dimension maximale à choisir pour le rayon de la source 12, mais cet exemple est directement transposable à une source additionnelle 32. D'une manière générale, la source 12 est de préférence d'un rayon inférieur à 150$\mu$m, avantageusement moins de 100$\mu$m. Le calcul qui suit n'est pas limitatif. La figure 5 est similaire à la figure 3 dans son principe mais se concentre sur une seule source 12 par souci de simplicité. Y sont présentés des rayons cheminant dans le dispositif de l'invention, suivant des angles donnés. La matrice de micro-miroirs est ici vue en coupe selon la direction moyenne de sa plus grande dimension (sa longueur, ici parallèle à la surface de transmission 11).

La surface de transmission 11 est représentée de manière similaire à la figure 3 et est avantageusement portée globalement par un plan écran. Similairement à la figure 3, des micro-miroirs sont agencés sur le dispositif à matrice de micro-miroirs. On a représenté uniquement, sur une ligne de micro-miroirs, dirigée suivant la longueur de la matrice sur la figure 3, en figure 5, seulement trois micro-miroirs caractéristiques 15a, 15b, 15c. Les deux premiers sont deux miroirs d'extrémité 15a, 15c. Les chemins des rayons réfléchis par ces miroirs vont déterminer la largeur « l » de l'image produite sur la surface de transmission 11.

Le troisième micro-miroir 15b illustré est central, situé au milieu de la matrice 14.

Pour les deux premiers miroirs 15a, 15c, on a appelé, sur la figure 5, $\beta$ et $\beta'$ l'angle formé pour le miroir considéré entre un rayon central émis par le centre de la source 12 et impactant le centre dudit miroir, et un plan parallèle au plan écran passant par le centre du miroir.

Les angles $\gamma$ et $\gamma'$ correspondent à l'angle formé entre le rayon réfléchi issu du rayon central et le plan parallèle au plan écran. A propos du miroir central 15b, ces mêmes angles ont été repérés avec les mêmes lettres $\alpha$, $\beta$, $\gamma$ en employant l'indice « 0 ». Ainsi, $\beta_0$ est l'angle formé entre un rayon central issu de la source et impactant le milieu du micro-miroir central, et un plan parallèle à la surface de transmission.

Par application des principes de la réflexion sur les miroirs, on peut notamment écrire :

$$\alpha + \beta + \varepsilon = \frac{\pi}{2}$$

$$\varepsilon = \frac{\pi}{2} - \alpha - \beta$$

$$\begin{aligned} \gamma &= \beta + 2\,\varepsilon \\ &= \beta + \pi - 2\alpha - 2\beta \\ &= \pi - \beta - 2\alpha \end{aligned}$$

$$\gamma' = \pi - \beta' - 2\alpha$$

$$\gamma_0 = \pi - \beta_0 - 2\alpha$$

On a par ailleurs défini une dimension de la matrice « L », liée à la dimension « l » de l'image. « L » est ici la distance entre les centres des deux miroirs d'extrémité. A noter que les micro-miroirs sont de petites dimensions, typiquement de moins de $10\mu$m.

Comme indiqué plus haut, la source est agencée pour émettre un faisceau qui est à son origine de petite taille, et notamment de petit rayon, ici nommé $R_s$. On comprend que cette dimension, même réduite, engendre un décalage angulaire entre un rayon émis par le centre de la source et atteignant du miroir, et un rayon émis par le bord de la source (sur son rayon de bordure à son origine) et atteignant le milieu du miroir.

Ce décalage se retrouve par symétrie au niveau des rayons réfléchis par le miroir sur la base de deux rayons indiqués ci-dessus. Ce décalage est appelé « $\eta$ » sur la figure 5. La correspondance avec la valeur « $R_s$ » y est aussi présentée.

On comprend que la taille d'un pixel ($T_p$) produit de ce micro-miroir est fonction de $\eta$ et d'une valeur D qui correspond à la distance séparant, suivant une normale à la surface de transmission, ladite surface et le plan de référence de la matrice de micro-miroirs. $T_p$ est lui-même sensiblement égal à deux fois $R_p$ qui est la projection sur la surface de transmission 11 de la dimension en rayon de la source 12.

On peut alors écrire les expressions suivantes :

$$\frac{D}{tg\gamma} + L - \frac{D}{tg\gamma'} = l$$

$$\rightarrow \frac{l - L}{D} - \frac{1}{tg\gamma} - \frac{1}{tg\gamma'}$$

$$tg\beta = \frac{x}{y - L/2}$$

$$tg\beta' = \frac{x}{y + L/2}$$

$$tg\beta_0 = \frac{\alpha}{y}$$

$$tg\eta = \frac{R_S}{\sqrt{x^2 + y^2}}$$

$$Dtg\left(\frac{\pi}{2} - \gamma_0\right) - Dtg\left(\frac{\pi}{2} - \gamma_0 - \eta\right) = R_p$$

Pour un écart latéral y fixé, la distance x de la source au DMD(x) est solution de :

$$\frac{l - L}{D} = \frac{1}{tg\left(\pi - atan\left(\frac{x}{y - \frac{L}{2}}\right) - 2\alpha\right)} - \frac{1}{tg\left(\pi - atan\left(\frac{x}{y + \frac{L}{2}}\right) - 2\alpha\right)}$$

Et

$$T_P = 2D\left\{ tg\left(atan\frac{x}{y} - 2\alpha - \frac{\pi}{2}\right) - tg\left(atan\frac{x}{y} - 2\alpha - atan\frac{R_S}{\sqrt{x^2 + y^2}} - \frac{\pi}{2}\right)\right\}$$

Avec :

- l est la largeur de l'image produite sur la surface de transmission 11 ;
- L est la dimension en longueur ou en largeur (de préférence la plus grande des deux) de la matrice de micro-miroirs ;
- D est la distance séparant la surface de transmission 11 et la matrice de micro-miroirs 14 ; cette distance est de préférence prise suivant une normale à la surface de transmission 11 passant par le centre du miroir central 15b.
- $\alpha$ est l'angle maximal de basculement d'un micro-miroir par rapport au plan contenant les axes de rotation des micro-miroirs.

Et,

- y correspond à la distance entre le milieu du micro-miroir central 15b et la projection orthogonale du milieu de la sortie de la source 12 sur un plan parallèle à la surface de transmission 11
- x correspond à la distance entre le milieu de la surface de sortie de la source (12) et un plan contenant les axes de rotation des micro-miroirs.
- Le micro-miroir central 15b est le micro-miroir de la matrice de micro-miroirs 14 qui est situé le plus proche du centre géométrique de la matrice de micro-miroirs 14;
- $\beta_0$ est l'angle formé entre un rayon central issu de la source 12 et impactant le milieu du micro-miroir central 15b, et un plan parallèle à la surface de transmission 11.

On peut ainsi définir, suivant les paramètres du dispositif à construire, la taille maximale des faisceaux originels de la source 12 pour réaliser l'invention, dans cet exemple de réalisation. Comme indiqué précédemment, la taille d'un micro-miroir est négligeable relativement à celle de la source ce qui autorise l'approximation des calculs ci-dessus.

De façon additionnelle ou alternative, et comme introduit précédemment, la source peut avoir un rayon inférieur à 100μm.

L'exemple de la figure 3 et la précision donnée en figure 5 pour la formation de la source 12 ou d'une autre source illustrent la formation de telles sources suivant un premier mode de réalisation de l'invention. En particulier, dans le cas d'espèce, les sources 12,32 sont distinctes.

On décrit ci-après différentes solutions non exhaustives pour réaliser de telles sources. Il est d'abord rappelé que la source 12, 32 peut être primaire, c'est-à-dire que le générateur de lumière (un émetteur) produit directement le faisceau de taille convenable.

Dans un autre cas, c'est un système de transformation qui produit ce faisceau sur la base d'un émetteur de lumière qui n'est pas directement adapté. La source employée pour impacter la matrice DMD est alors secondaire.

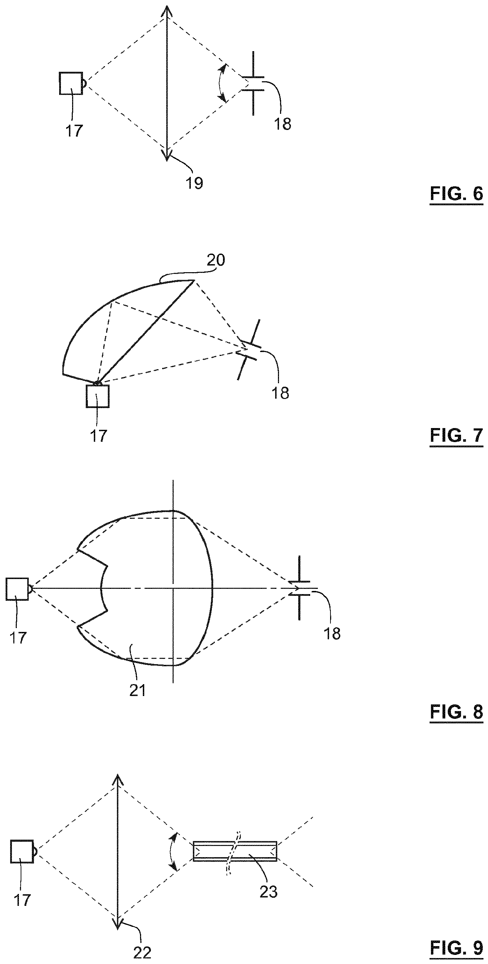

A la figure 6, un émetteur de lumière 17, par exemple à au moins une LED, dirige un faisceau primaire vers une lentille convergente 19 dont le point focal image est situé sur ou à proximité du centre d'une ouverture 18, de préférence circulaire, faisant office de diaphragme. La taille du trou de l'ouverture 18 conditionne la dimension du faisceau de la source ainsi constitué et sert de source secondaire pour éclairer la matrice de micro-miroirs 14.

La figure 7 présente une variante de la figure 6 où la lentille 19 a été remplacée par un réflecteur 20, de préférence ellipsoïdal, permettant de faire converger les rayons de l'émetteur vers l'ouverture 18.

De même, la figure 8 montre la coopération d'un émetteur 17 avec un collimateur dioptrique 21. L'émetteur 17, tel une LED, est reçu dans une cavité de collecte de la lumière. Une partie convexe de sortie fait converger ces rayons vers l'ouverture. D'autres systèmes à ouverture réglant la taille d'un spot lumineux sont possibles.

Le cas de la figure 9 emploie une fibre optique 23. De préférence, celle-ci reçoit des rayons d'un faisceau convergeant vers son entrée depuis une optique convergente, par exemple une lentille 22 biconvexe, elle-même recevant de la lumière d'un émetteur 17.

Une autre possibilité consiste à employer une source laser, de petite taille par construction, et éventuellement d'y associer un moyen de conversion pour en dégrader la cohérence. Ce moyen de conversion peut comprendre des particules luminophores, et notamment phosphorescentes ou des boîtes quantiques (Q Dot).

La figure 4 présente une solution alternative pour la réalisation des sources 12, 32. En effet, à cette figure, une source primaire 33 est employée pour être à l'origine de l'ensemble des rayons fournis en aval par les sources 12,32. La source primaire 33 peut correspondre à une des sources fournies dans les exemples précédents. Suivant l'exemple, il peut s'agir d'une source laser, d'une source LED éventuellement dotée d'un dispositif de réduction de la taille du faisceau par exemple tel que décrit en référence aux figures 6 à 9.

Dans la configuration illustrée, la lumière issue de la source primaire 33 est transmise un répartiteur 34 par un chemin lumineux qui est dans l'exemple une fibre optique 35. Toute autre disposition permettant de guider les ondes lumineuses en direction du répartiteur 34 peut donner satisfaction dans le cadre de l'invention. Le répartiteur 34 est configuré pour répartir la lumière issue de la source primaire 33 en un ou plusieurs faisceaux de sortie. Chaque faisceau de sortie est configuré pour être projeté sur la matrice 14 de sorte à produire l'une des sources 12,32. Ainsi, en figure 4, la source 32 est produite par une fibre optique 37 en sortie du répartiteur 34 et dont l'extrémité distale correspond à la zone d'émission du faisceau issu de la source 32. De façon similaire, la source 12 est produite par une fibre 36 dont une extrémité proximale reçoit des rayons lumineux issus du répartiteur 34 et dont une extrémité distale est disposée de sorte à opérer une projection en direction de la matrice 14. Toute autre disposition pour assurer le cheminement des rayons lumineux issus du répartiteur 34 vers les sources 12, 32 entre dans le cadre de la présente invention. Tel qu'indiqué précédemment, la projection sur la matrice 14 est de préférence directe pour les sources 12, 32 mais cela n'est pas exclusif de l'invention pour laquelle des dispositifs intermédiaires tels que réflecteurs ou lentilles peuvent être disposés.

En résumé, dans le mode de réalisation de la figure 4, une partie des moyens utilisés par les sources 12, 32 sont partagés. C'est particulièrement le cas de la source primaire 33, de la fibre optique 35 et du répartiteur 34. Les autres composants tels que les fibres optiques 36,37 et les dispositifs de conversion 38, 39 peuvent être dédiés à l'une des sources 12, 32. Le terme source s'entend donc ici comme couvrant aussi bien une source primaire qu'une source secondaire. Le faisceau issu d'une source s'entend du faisceau produit en sortie de l'ensemble constituant la source qu'elle soit primaire ou secondaire.

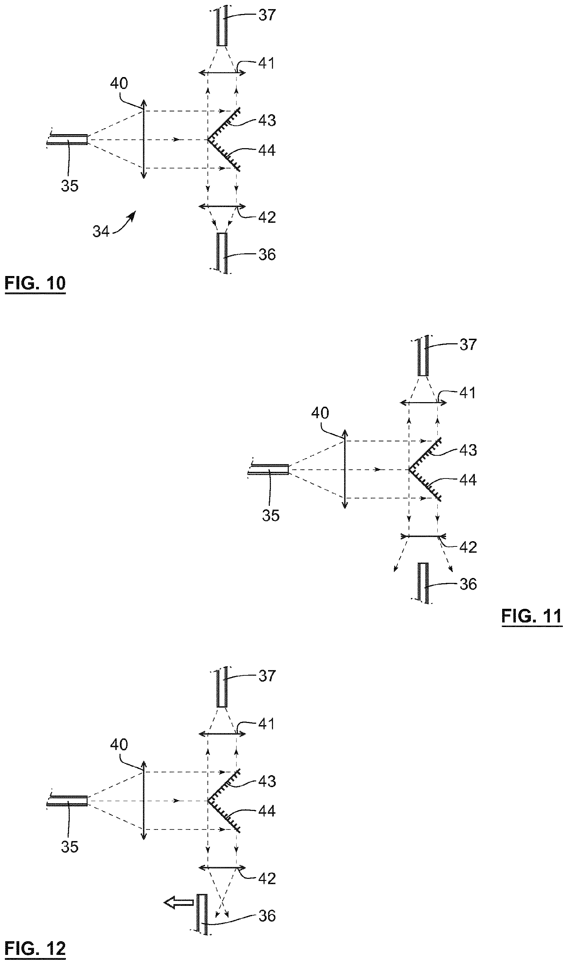

Avantageusement, le répartiteur 34 permet de moduler la quantité de lumière fournie à l'une ou l'autre des sources, par exemple dans une mesure allant de zéro à 100 %. À titre d'exemple, le répartiteur 34 peut être réalisé avec l'une des solutions respectivement présentées à la figure 10 et aux figures 11 et 12.

Dans lequel la figure 10, la fibre 35 illumine un dispositif optique, par exemple une lentille 40, de sorte à adresser des rayons lumineux, de préférence collimatés, vers la surface d'un miroir biseauté comprenant un miroir supérieur 43 réfléchissant la lumière en direction de la fibre optique 37 et un miroir inférieur 44 réfléchissant la lumière en direction de la fibre optique 36. Par exemple, les miroirs 43 44 peuvent être plans et inclinés à 90°, le sommet du biseau des miroirs 43,44 étend orienté suivant l'axe optique de la lentille 40 ou de tout autre dispositif optique. De préférence, les rayons réfléchis par l'un et/ou l'autre des miroirs 43,44 sont concentrés par un dispositif optique telle une lentille convergente 41,42. En outre, pour permettre une répartition du flux lumineux issu de la fibre optique 35, au moins l'un parmi les dispositifs optiques en question permet une modification du flux entrant dans la fibre 36,37 correspondante. Dans l'exemple, le dispositif 42, sous forme d'une lentille, présente une focale variable électriquement de sorte à modifier notablement la quantité de lumière admise dans la fibre optique 36. On pourra notamment utiliser des lentilles à focale variable électriquement connue sous la marque déposée varioptic®. Ainsi, une commande électrique appliquée à la lentille 42 permet de modifier le flux lumineux entrant dans la fibre 36.

Dans la variante de réalisation présentée en figure 12, la quantité de lumière admise dans la fibre optique 36 et contrôlée par l'intermédiaire d'un mouvement relatif entre celle-ci et le miroir 44 qui lui fait face. Un moment très faible, notamment de quelques dizaines à quelques centaines de micros peuvent suffire pour placer l'embouchure de la fibre 36 selon la direction moyenne des rayons issus du miroir 44 éventuellement transmis par le dispositif 42, ou pour déplacer la fibre 36 de sorte à ce que moins de lumière ou plus aucune lumière ne rentre dans cette dernière.

L'invention n'est pas limitée aux exemples cités ci-dessus. En outre, l'une et/ou l'autre des fibres 36,37 peuvent disposer de ce moyen de répartition de lumière. Différents moyens de répartition lumière peuvent être par ailleurs combinés. Les exemples donnés ci-dessus et les illustrations des figures 10 à 12 doivent par ailleurs pas être considérées comme limitatif d'un type de miroir ou d'un type d'optique suivant le chemin des rayons lumineux.

Quel que soit le mode de réalisation, il peut être utile que l'une au moins des sources 12, 32 soit équipée d'un dispositif de conversion configuré pour recevoir une lumière d'entrée dans un intervalle de longueurs d'onde donné et pour émettre dans un autre intervalle de longueurs d'onde. C'est particulièrement ce qui est illustré en figure 4 avec, en sortie des fibres optiques 36, 37, des dispositifs de conversion, respectivement 39, 38 permettant de transformer la couleur de la lumière reçue depuis la source primaire 33 de sorte à l'adapter à la ou les fonctions réalisées par les sources 12, 32. Ainsi, par exemple, la source primaire 33 peut émettre dans les longueurs d'onde de couleur blanche et les dispositifs de conversion 38, 39 permettent d'obtenir en sortie d'autres couleurs, notamment les couleurs rouge et orange.

A cet effet, le dispositif de conversion 38 ou 39 peut être une plaque composite ayant une matrice transmissive de lumière, transparente de préférence, et des charges sous forme de particules luminophores ou de boîtes quantiques appelées « Q dots » en anglais. La matrice est typiquement un matériau polymère tel du PMMA précité ou des polycarbonates. Ce dispositif comporte aussi avantageusement un réflecteur placé en sortie du dispositif de conversion. Ce réflecteur assure un filtrage des rayons sortant du dispositif de conversion de sorte à interdire la transmission de rayons n'ayant pas fait l'objet d'une conversion. Le réflecteur peut être un filtre dichroïque.

Suivant une variante de l'invention, la source (12) et/ou la source additionnelle (32) est contrôlée pour émettre dans des longueurs d'onde de différentes couleurs.

Selon une première alternative, la source de lumière est une diode électroluminescente de type RGB, pour l'acronyme anglais Red, Green ,Blue et comporte trois surfaces émettrices qui émettent une lumière dans des longueurs d'ondes respectivement de couleur rouge, vert et bleu. On réalise la couleur émise par la source de lumière en mélangeant les couleurs émises par les trois surfaces émettrices.

Selon une autre alternative, la source de lumière est une diode électroluminescente avec au moins deux surfaces émettrices émettant dans des longueurs d'onde dans des couleurs différentes de préférence choisies parmi rouge, orange et blanc. On réalise la couleur émise par la source de lumière en activant sélectivement la surface émettrice correspondant à la couleur souhaitée.

Comme indiqué précédemment, il est avantageux que le dispositif présente un mode de fonctionnement mixte dans lequel les sources 12,32 sont actives simultanément. L'invention peut présenter plusieurs modes de fonctionnement mixte différant par le nombre de miroirs 15 affectés à la réflexion des rayons issus de l'une ou l'autre de ces sources 12, 32 vers la surface de transmission 11. En outre, le dispositif peut comporter d'autres modes de fonctionnement dans lesquels l'une ou l'autre parmi les sources 12, 32 est inactive, c'est-à-dire qu'aucun rayon lumineux n'est issu de l'une de ces sources.

Suivant une autre possibilité, la source primaire 33 illustrée en figure 4 peut servir à l'émission d'un faisceau, qui peut être permanent, directement vers la surface de projection 11, sans passer par la réflexion sur la matrice 14. Ce mode de réalisation est particulièrement avantageux lorsque l'on souhaite un effet de style au niveau de la glace de sortie du feu, effet de style qui peut être continu alors même que les fonctions d'éclairage et de signalisation issues des sources 12 et 32 sont commandées suivant le mode de fonctionnement souhaité et suivant les fonctions d'éclairage ou de signalisation à fournir. Par exemple, sur la base du chemin de fibre optique 35, 36, 37 de la figure 4, une ou plusieurs fibres optiques de dérivation peuvent être raccordées à l'une de ces fibres et configurées pour diriger directement la lumière vers la surface de transmission 11. Cette ou ces fibres de dérivation peuvent être raccordées à la fibre 35. L'expression directement signifie sans passer par la matrice 14, la projection vers la surface de transmission 11 pouvant s'opérer avec des éléments intermédiaires et notamment des guides d'ondes ou encore des dispositifs optiques de réflexion ou des dioptres. Les fibres supplémentaires peuvent notamment être des fibres diffusantes observées à travers la surface de sortie du feu.

L'invention n'est pas limitée aux modes de réalisation décrits mais s'étend à tout mode de réalisation conforme à son esprit.

REFERENCES

1. Zone de projection
2. Source
3. Réflecteur
4. Matrice
5. Lentille
6. Système optique

10. Dispositif
11. Surface de transmission
12. Source
13. Image
14. Matrice
15a,15b,15c. Micro-miroir
16. Plan de référence
17. Emetteur
18. Ouverture
19. Lentille
20. Réflecteur
21. Collimateur dioptrique
22. Lentille
23. Fibre optique

32. Source additionnelle
33. Source primaire
34. Répartiteur
35. Fibre optique
36. Fibre optique
37. Fibre optique
38. Dispositif de conversion
39. Dispositif de conversion

**Revendications**

**1.** Dispositif (10) arrière d'éclairage et/ou de signalisation, notamment pour véhicule automobile, comprenant une source de lumière (12), une surface de transmission (11) et des moyens de distribution d'au moins une partie de la lumière issue de la source (12) sur la surface de transmission (11), les moyens de distribution comprenant une matrice (14) de micro-miroirs pilotables chacun suivant au moins deux positions d'inclinaisons différentes comprenant une première position dans laquelle des rayons issues de la source (12) sont renvoyés par un micro-miroir vers la surface de transmission et une deuxième position dans laquelle les rayons issus de la source (12) ne sont pas renvoyés par un micro-miroir vers la surface de transmission, **caractérisé en ce qu'**il comporte au moins une source additionnelle (32) de lumière configurée de sorte que des rayons issus de la source additionnelle (32) sont renvoyés par un micro-miroir vers la surface de transmission quand ledit micro-miroir est dans la deuxième position et ne sont pas renvoyés par un micro-miroir vers la surface de transmission quand ledit micro-miroir est dans la première position, les moyens de distribution comprenant au moins un mode de fonctionnement mixte dans lequel la source (12) et la source additionnelle (32) sont émissives simultanément et dans lequel au moins une partie des micro-miroirs sont dans la première position et au moins une autre partie des micro-miroirs sont dans la deuxième position.

**2.** Dispositif selon la revendication précédente, dans lequel la source (12) et la source additionnelle (32) ont des intervalles de longueurs d'ondes d'émission de lumière différentes.

**3.** Dispositif selon l'une des revendications précédentes, dans lequel la source (12) est configurée pour émettre de la lumière dans les longueurs d'ondes dans la couleur rouge.

**4.** Dispositif selon l'une des revendications précédentes, dans lequel la source additionnelle (32) est configurée pour émettre de la lumière dans les longueurs d'ondes dans la couleur orange.

**5.** Dispositif selon l'une des revendications précédentes, dans lequel la puissance rayonnée d'au moins l'une parmi la source (12) et la source additionnelle (32) est inférieure à 1W.

**6.** Dispositif selon la revendication précédente, dans lequel la source (12) et la source additionnelle (32) partagent une même source primaire (33), le dispositif comprenant un répartiteur (34) de rayons lumineux issus de la source primaire (33) entre la source (12) et la source additionnelle (32).

**7.** Dispositif selon la revendication précédente, comprenant une fibre optique (35) de conduction de lumière depuis la source primaire (33) jusqu'au répartiteur (34).

**8.** Dispositif selon l'une des deux revendications précédentes, dans lequel au moins l'une parmi la source (12) et la source additionnelle (32) comprend une fibre optique de conduction de lumière en sortie du répartiteur (34) et dont une extrémité distale est dirigée vers la matrice (14).

**9.** Dispositif selon l'une des revendications 6 à 8 dans lequel au moins une parmi la source (12) et la source additionnelle (32) comprend un dispositif de conversion configuré pour recevoir de la lumière issue de la source primaire (33) et pour réémettre de la lumière convertie dans un intervalle de longueurs d'ondes différent de celui de la lumière issue de la source primaire (33).

**10.** Dispositif selon la revendication précédente, dans lequel le dispositif de conversion comprend des éléments luminophores.

**11.** Dispositif selon l'une des revendications 6 à 10, comprenant un diffuseur de lumière configuré pour recevoir des rayons lumineux issus de la source primaire (33) et pour les renvoyer au moins en partie vers la surface de transmission, sans réflexion sur la matrice (14).

**12.** Dispositif selon l'une des revendications précédentes, dans lequel les moyens de distribution comprennent au moins un autre mode de fonctionnement dans lequel la source (12) est émissive et la source additionnelle (32) est non émissive et dans lequel au moins une partie des micro-miroirs sont dans la première position et au moins une autre partie des micro-miroirs sont dans la deuxième position.

**13.** Dispositif selon l'une des revendications précédentes, dans lequel les moyens de distribution comprennent au moins un autre mode de fonctionnement dans lequel la source (12) est non émissive et la source additionnelle (32) est émissive et dans lequel au moins une partie des micro-miroirs sont dans la première position et au moins une autre partie des micro-miroirs sont dans la deuxième position.

**14.** Dispositif selon l'une des revendications précédentes, dans lequel les moyens de distribution comprennent au moins un autre mode de fonctionnement mixte dans lequel la source (12) et la source additionnelle (32) sont émissives simultanément et dans lequel au moins une partie des micro-miroirs sont dans la première position et au moins une autre partie des micro-miroirs sont dans la deuxième position, le nombre de micro-miroirs dans la première position et/ou dans la deuxième position y étant différent du nombre de micro-miroirs dans la première position et/ou dans la deuxième position du mode de fonctionnement mixte.

**15.** Dispositif (10) selon l'une des revendications précédentes, dans lequel au moins un parmi la source (12) et la source additionnelle (32) est configurée pour émettre un faisceau lumineux dont le rayon en sortie de source est inférieur à 100 μm.

**16.** Dispositif (10) selon la revendication précédente, dans lequel le faisceau lumineux est divergent et illumine directement la matrice (14) de micro-miroirs.

**17.** Dispositif (10) selon l'une quelconque des revendications précédentes, dans lequel au moins l'une parmi la source (12) et la source additionnelle (32) comprend au moins un parmi : une diode électroluminescente, un émetteur laser, une source lumineuse à semi conducteur comprenant une pluralité d'unités électroluminescentes de dimensions submillimétriques.

18. Feu arrière d'éclairage et/ou de signalisation de véhicule automobile équipé d'au moins un dispositif (10) d'éclairage et/ou de signalisation selon l'une quelconque des revendications précédentes.

19. Feu arrière selon la revendication précédente, comprenant une glace de sortie de lumière hors du feu, ladite glace comprenant la surface de transmission (11).

**FIG. 1**

**FIG. 2**

_FIG. 3_

_FIG. 4_

**FIG. 5**

17

19

**FIG. 6**

20

18

17

**FIG. 7**

17

21

18

**FIG. 8**

17

22

23

**FIG. 9**

**FIG. 10**

**FIG. 11**

**FIG. 12**

**Europäisches Patentamt**

**European Patent Office**

**Office européen des brevets**

**RAPPORT DE RECHERCHE EUROPEENNE**

Numéro de la demande

EP 17 16 2431

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | US 2015/160454 A1 (BHAKTA VIKRANT R [US]) 11 juin 2015 (2015-06-11) | 1-5, 12-15, 17,18 | INV. F21S8/10 |
| Y | * alinéas [0041] - [0087]; figures 1-13 * ----- | 6-11,19 | |
| Y | DE 103 44 173 A1 (HELLA KGAA HUECK & CO [DE]; UNIV PADERBORN [DE]) 28 avril 2005 (2005-04-28) * alinéas [0035] - [0075]; figures 1-16 * ----- | 6-11 | |
| Y | JP 2015 152724 A (TOYOTA MOTOR CORP) 24 août 2015 (2015-08-24) * alinéas [0010] - [0035]; figures 1-6 * ----- | 19 | |
| X | WO 2015/033764 A1 (KOITO MFG CO LTD [JP]) 12 mars 2015 (2015-03-12) <br><br> * le document en entier * ----- | 1-5, 12-15, 17,18 | |
| X | JP 2015 174551 A (TOYOTA MOTOR CORP) 5 octobre 2015 (2015-10-05) <br><br> * alinéas [0012] - [0034]; figures 1-7 * ----- | 1-5, 12-15, 17,18 | DOMAINES TECHNIQUES RECHERCHES (IPC) F21S B60Q F21V |
| X | EP 1 489 854 A2 (SEIKO EPSON CORP [JP]) 22 décembre 2004 (2004-12-22) * le document en entier * ----- | 1-5, 12-14,17 | |
| X | US 2012/250137 A1 (MAXIK FREDRIC S [US] ET AL) 4 octobre 2012 (2012-10-04) * alinéas [0102] - [0107]; figures 1-12 * ----- | 1-5, 12-14,17 | |
| A | DE 197 37 653 A1 (PATENT TREUHAND GES FUER ELEKTRISCHE GLUEHLAMPEN MBH [DE]) 4 mars 1999 (1999-03-04) * le document en entier * ----- | 1-19 | |

Le présent rapport a été établi pour toutes les revendications

| Lieu de la recherche | Date d'achèvement de la recherche | Examinateur |
|---|---|---|
| Munich | 7 juillet 2017 | Sarantopoulos, A |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
.......................................................
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 17 16 2431

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

07-07-2017

| Document brevet cité au rapport de recherche | | Date de publication | Membre(s) de la famille de brevet(s) | | Date de publication |
|---|---|---|---|---|---|
| US 2015160454 | A1 | 11-06-2015 | EP<br>US<br>WO | 3079946 A1<br>2015160454 A1<br>2015089018 A1 | 19-10-2016<br>11-06-2015<br>18-06-2015 |
| DE 10344173 | A1 | 28-04-2005 | AUCUN | | |
| JP 2015152724 | A | 24-08-2015 | AUCUN | | |
| WO 2015033764 | A1 | 12-03-2015 | JP<br>WO | WO2015033764 A1<br>2015033764 A1 | 02-03-2017<br>12-03-2015 |
| JP 2015174551 | A | 05-10-2015 | AUCUN | | |
| EP 1489854 | A2 | 22-12-2004 | CN<br>CN<br>EP<br>EP<br>JP<br>US<br>US | 1617013 A<br>101060638 A<br>1489854 A2<br>1876839 A2<br>2005025160 A<br>2005007563 A1<br>2007040998 A1 | 18-05-2005<br>24-10-2007<br>22-12-2004<br>09-01-2008<br>27-01-2005<br>13-01-2005<br>22-02-2007 |
| US 2012250137 | A1 | 04-10-2012 | CN<br>EP<br>US<br>US<br>US<br>WO | 103733114 A<br>2691805 A1<br>2012250137 A1<br>2013271818 A1<br>2014211295 A1<br>2012135173 A1 | 16-04-2014<br>05-02-2014<br>04-10-2012<br>17-10-2013<br>31-07-2014<br>04-10-2012 |
| DE 19737653 | A1 | 04-03-1999 | DE<br>WO | 19737653 A1<br>9911968 A1 | 04-03-1999<br>11-03-1999 |

EPO FORM P0460

Pour tout renseignement concernant cette annexe : voir Journal Officiel de l'Office européen des brevets, No.12/82